# EUROPÄISCHE PATENTSCHRIFT

(11) **EP 2 546 716 B1**
(45) Veröffentlichungstag und Bekanntmachung des Hinweises auf die Patenterteilung: **15.04.2020**
(21) Anmeldenummer: 12004722.0
(22) Anmeldetag: 23.06.2012
(51) Int. Cl.: G05D 1/12

(54) **Lenken eines Vehikels in Richtung eines Ziels**
Steering of a vehicle in the direction of a target
Commande d'un véhicule dans le sens d'une cible

(30) Priorität: 30.06.2011 DE 102011107630
(43) Veröffentlichungstag der Anmeldung: 16.01.2013
(73) Patentinhaber: MBDA Deutschland GmbH, 86529 Schrobenhausen (DE)
(72) Erfinder: Schöttl, Alfred, 80809 München (DE)
(74) Vertreter: Isarpatent

(56) Entgegenhaltungen:
- EP-A1- 1 014 028
- US-A- 5 605 307
- US-B2- 7 032 858
- US-B2- 7 620 483
- BORKY J M: "Payload technologies and applications for uninhabited air vehicles (UAVs)", AEROSPACE CONFERENCE, 1997. PROCEEDINGS., IEEE SNOWMASS AT ASPEN, CO, USA 1-8 FEB. 1997, NEW YORK, NY, USA,IEEE, US, Bd. 3, 1. Februar 1997 (1997-02-01), Seiten 267-283, XP010214659, DOI: 10.1109/AERO.1997.574874 ISBN: 978-0-7803-3741-1

## Beschreibung

### GEBIET DER ERFINDUNG

Die Erfindung betrifft ein Verfahren und ein System zum Lenken eines Vehikels in Richtung eines Ziels.

### HINTERGRUND DER ERFINDUNG

Typische Missionen eines führerlosen Vehikels, beispielsweise eines Fahrzeugs, Flugkörpers, Flugzeugs, Schiffs, etc. haben als Aufgabe das Erreichen eines Zielobjekts. Zum Festlegen und Verfolgen dieses Zielobjektes existieren unterschiedliche Ansätze.

Im einfachsten Fall kann die Zielzuweisung auf ein stehendes Ziel durch Angabe der Position, etwa in Form von georeferenzierten Koordinaten (also z. B. geographische Länge, Breite und evtl. Höhe im WGS84-System) geschehen. Verfügt das Vehikel über eine entsprechende Navigationseinrichtung (z. B. einen GPS-Empfänger), kann unter Verwendung der navigierten Daten auf die Zielkoordinaten gelenkt werden. Die Genauigkeit dieser Form der Zielzuweisung ist u. a. durch die Genauigkeit der verfügbaren Positionsdaten beschränkt. Bei langsam bewegten Zielen kann durch eine Übertragungseinrichtung (einen Datenlink) eine ständige Aktualisierung der Positionsdaten erfolgen. Dies kann jedoch voraussetzen, dass das Zielobjekt durch einen externen Beobachter ständig vermessen wird.

Aus diesem Grund erfolgt die Zielverfolgung üblicherweise im Vehikel unter Verwendung eines Umgebungssensors (etwa einer Kamera) und einer Zielverfolgungseinrichtung (einem sogenannten Tracker). Da in diesem Fall im Vehikel in Echtzeit Umgebungssensordaten ausgewertet werden müssen (typischerweise also die Digitalisierung des Bildes, die Übertragung in einen Bildverarbeitungsrechner sowie die eigentliche Bildverarbeitung), kann die Lösung kostenintensiv sein. Eine nicht durch eine Bedienperson überwachte Bildverarbeitung kann außerdem fehlerträchtig sein. Außerdem kann ein Verlieren des Ziels aus dem Sensorblickfeld oder ein Springen auf ein anderes Ziel (etwa bei kurzzeitigen Verdeckungen) nicht ausgeschlossen werden. Soll während einer Mission das Ziel dynamisch (etwa durch eine entfernte Bedienperson an einer Bedienstation) verfolgt werden (sog. Lock On After Launch, LOAL), kann damit eine aufwändige und fehlerträchtige Zielverfolgungseinrichtung im Vehikel erforderlich sein.

Alternativ gibt es sog. Man-In-The-Loop-Systeme, in denen eine entfernte Bedienperson über eine Übertragungseinrichtung die Umgebungssensordaten (zum Beispiel ein Bild) erhält und durch Bedienkommandos die Nachführung auf das Ziel durchführt. Da Gewichts- und Kostenbeschränkungen bei der Bedienstation häufig weniger restriktiv sind, kann auf der Bedienstation die Bedienung durch geeignete technische Maßnahmen leichter unterstützt werden. So kann auf der Bedienstation ebenfalls ein Tracker zum Einsatz kommen, der das Zielobjekt (ggf. unter Aufsicht der Bedienperson) verfolgt. Die eingesetzten Verfahren können in der Regel aufwändiger sein als die direkt im Vehikel eingesetzten Verfahren, da wegen der geringeren Beschränkungen in der Regel mehr Rechenkapazität zur Verfügung steht. Durch einen möglichen Zeitverzug bei der Bildübertragung und der Übertragung der durch die Bedienstation generierten Kommandos an das Vehikel, kann der Einsatz solcher Systeme jedoch massiv eingeschränkt sein. In diesem Fall kann sogar gezeigt werden, dass ein Lenken auf das Ziel nur dann möglich ist (d. h. die Stabilität eines Lenkregelkreises garantiert werden kann), wenn die Geschwindigkeit des Vehikels entsprechend des Zeitverzugs reduziert wird.

BORKY J M: "Payload technologies and applications for uninhabited air vehicles (UAVs)" offenbart ein unbemannte Flugzeug, das eine Reihe von elektronischen Geräten, wie beispielweise eine Kamera oder eine Navigationseinrichtung, trägt, zum Erfüllen unterschiedlicher Missionen.

US 7 620 483 B2 betrifft ein Lenksystem und Verfahren für ein Fahrzeug über geblieben Kommunikationskanal unter Verwendung einer Kamera und einer Zielverfolgungseinrichtung im Fahrzeug, wobei die Zielposition durch die Markierung von einem Operator in einem Kontrollzentrum bestimmt wird.

US 5,605,307 A zeigt ein Lenkverfahren, bei dem einem Operator ein Gebiet angezeigt wird, das mit einem von dem Operator ferngelenkten Vehikel erreicht werden kann.

### ZUSAMMENFASSUNG DER ERFINDUNG

Es ist Aufgabe der Erfindung ein kostengünstiges Vehikel bereitzustellen, das selbständig ein vorgegebenes Ziel erreichen kann.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein Verfahren zum Lenken eines Vehikels in Richtung eines Ziels bzw. zum Ziel. Das Vehikel kann dabei ein autonomes bzw. unbemanntes Vehikel sein, beispielsweise ein Fluggerät wie etwa ein Aufklärungsflugzeug oder eine Rakete. Auch kann das Vehikel ein Bodenfahrzeug oder Wasserfahrzeug sein. Das Ziel bzw. Zielobjekt kann ein festes Ziel, wie ein Gebäude, aber auch ein bewegliches Ziel, wie ein weiteres Vehikel, sein.

Ein weiterer Aspekt der Erfindung betrifft ein System mit einem Vehikel und einer Bedienstation bzw. Basisstation zum Lenken des Vehikels in Richtung eines Ziels. Das System ist dabei derartig ausgeführt, dass es das Verfahren zum Lenken des Vehikels ausführen kann. Es ist zu verstehen, dass Merkmale des Verfahrens auch Merkmale des Systems sein können und umgekehrt.

Gemäß einer Ausführungsform der Erfindung umfasst das Verfahren den Schritt von: Erfassen von Navigationsdaten des Vehikels mit einer Navigationseinrichtung des Vehikels. Beispielsweise kann die Navigationseinrichtung eine Position und/oder eine Orientierung des Vehikels als Navigationsdaten erfassen. Die Position des Vehikels kann dabei in Koordinaten, seine Orientierung in Winkeln angegeben werden. Es ist zu verstehen, dass die Navigationsdaten absolut oder relativ in Bezug auf eine festgelegte Zielposition ermittelt und angegeben werden können.

Gemäß einer Ausführungsform der Erfindung umfasst das Verfahren den Schritt von: Lenken des Vehikels in Richtung einer festgelegten Zielposition auf Basis der Navigationsdaten mit einer Steuereinrichtung des Vehikels. Mit anderen Worten kann das Vehikel selbstständig in Richtung des Ziels steuern bzw. lenken, wobei lediglich die Navigationsdaten herangezogen werden. Die Zielposition kann dabei auch in absoluten Koordinaten oder in relativen Koordinaten in Bezug auf das Vehikel angegeben werden.

Gemäß einer Ausführungsform der Erfindung umfasst das Verfahren den Schritt von: Erfassen von Umgebungsdaten des Vehikels mit einem Umgebungssensor des Vehikels. Beispielsweise kann der Umgebungssensor eine Kamera umfassen, wobei die Umgebungsdaten dann Bilddaten der Umgebung des Vehikels umfassen. Auch Radardaten können als Umgebungsdaten herangezogen werden. Auch ein Laserscanner als Umgebungssensor ist möglich. Mit anderen Worten ist das Vehikel mit einem Umgebungssensor, also einem Sensor, der Informationen über das zu erreichende Ziel liefern kann, und einer Navigationseinrichtung, die Informationen über die Position und die Orientierung des Vehikels im Raum liefert, ausgestattet. Zu betonen ist, dass die Umgebungsdaten nicht im Vehikel ausgewertet werden müssen. Das Vehikel muss lediglich mit den Navigationsdaten operieren.

Gemäß einer Ausführungsform der Erfindung umfasst das Verfahren den Schritt von: Übertragen der Umgebungsdaten und der Navigationsdaten an eine Basisstation. Die Basisstation kann sich entfernt vom Vehikel befinden. Beispielsweise ist die Basisstation ein Schiff oder ein Fahrzeug, von dem das Vehikel gestartet wurde. Die Datenübertragung kann dabei über Funk oder über Kabel erfolgen. Das Vehikel kann dazu eine erste Datenübertragungseinrichtung zum Senden der Umgebungsdaten und der Navigationsdaten zu der Basisstation und die Basisstation eine zweite Datenübertragungseinrichtung zum Empfangen der Daten aufweisen.

Das Vehikel kann also mit der Basisstation (ggf. drahtlos) verbunden sein. Damit kann die Basisstation zumindest teilweise die Datenaufbereitung der vom Umgebungssensor gelieferten Daten übernehmen. Neben den Umgebungsdaten werden außerdem Navigationsdaten des Vehikels übertragen. Die Basisstation kann aus diesen Daten eine Schätzung für die Zielposition ermitteln und überträgt sie zurück an das Vehikel.

Gemäß einer Ausführungsform der Erfindung umfasst das Verfahren den Schritt von: Ermitteln einer geschätzten Zielposition des Ziel aus den Umgebungsdaten und den Navigationsdaten in eine Positionsbestimmungseinrichtung der Basisstation. Beispielsweise können Bilddaten aus den Umgebungsdaten ausgewertet werden, um die Position des Ziels in den Bilddaten zu bestimmen. Aus der Position des Ziels in den Bilddaten und den Navigationsdaten, die die Position und die Orientierung des Umgebungssensors enthalten können, kann dann die Position des Ziels ermittelt oder zumindest abgeschätzt werden.

Gemäß einer Ausführungsform der Erfindung umfasst das Verfahren den Schritt von: Bestimmen von Zielmerkmalen des Ziels in den Umgebungsdaten in der Basisstation durch eine Zielverfolgungseinrichtung und Verfolgen der Zielmerkmale in den Umgebungsdaten über die Zeit durch die Zielverfolgungseinrichtung. Beispielsweise können sichtbare Zielmerkmale wie markante Punkte des Ziels, zum Beispiel Kanten, in den Umgebungsdaten ermittelt werden und über die Zeit verfolgt werden. Auf diese Weise kann beispielsweise die Position des Ziels in Bilddaten ermittelt werden.

Gemäß einer Ausführungsform der Erfindung umfasst das Verfahren den Schritt von: Initialisieren der Zielmerkmale durch eine Bedienperson in der Basisstation. Beispielsweise können die ersten Umgebungsdaten, die vom Vehikel aus übertragen werden, durch eine Bedienperson in der Basisstation betrachtet werden. Die Bedienperson kann dann bestimmte Zielmerkmale in den Umgebungsdaten markieren, die dann von der Zielverfolgungseinrichtung in den folgenden Umgebungsdaten weiter markiert und verfolgt werden.

Gemäß einer Ausführungsform der Erfindung umfasst das Verfahren den Schritt von: Ermitteln der geschätzten Zielposition aus den über die Zeit verfolgten Zielmerkmalen und den Navigationsdaten in einer Positionsbestimmungseinrichtung bzw. einem Trackfilter der Basisstation. Die Ermittlung der Zielposition in der Basisstation kann mit Hilfe eines Trackfilters erfolgen, das aus vergangenen und evtl. asynchron aus einer Datenaufbereitung zur Verfügung stehenden Umgebungsdaten und den vom Vehikel übertragenen Navigationsdaten die geschätzte Zielobjektposition ermittelt.

Gemäß einer Ausführungsform der Erfindung umfasst das Verfahren den Schritt von: Präzisieren der geschätzten Zielposition durch eine Bedienperson in der Basisstation. Neben der Zielauswahl kann auch bei der Zielverfolgung eine Bedienperson eingreifen.

Gemäß einer Ausführungsform der Erfindung umfasst das Verfahren den Schritt von: Übertragen der geschätzten Zielposition an das Vehikel mit einer zweiten Datenübertragungseinrichtung der Basisstation. Mit anderen Worten ist zwischen dem Vehikel und der Basisstation eine bidirektionale Datenkommunikation möglich, über die die Umgebungsdaten, die Navigationsdaten und die von der Basisstation ermittelte geschätzte Zielposition übertragen werden können.

Gemäß einer Ausführungsform der Erfindung umfasst das Verfahren den Schritt von: Ändern der festgelegten Zielposition in die geschätzte Zielposition durch die Steuereinrichtung des Vehikels. Beispielsweise kann auch eine erste Schätzung der Zielposition auf diese Art ermittelt werden. Mit anderen Worten kann die im Vehikel gespeicherte Zielposition damit durch die Basisstation nachgeführt oder aktualisiert werden. Auf diese Weise kann ein innerer Regelkreis, mit der das Vehikel auf das Ziel zusteuert, durch einen äußeren Regelkreis nachjustiert werden.

Zusammenfassend weist das Verfahren bzw. das Vehikel einen ersten Regelkreis (einen Lenkregelkreis) auf, bei dem das Vehikel selbstständig mittels der ermittelten Navigationsdaten in Richtung der festgelegten Zielposition steuert. In einem zweiten Regelkreis (einem Zielverfolgungsregelkreis), der das Vehikel und die Basisstation umfasst, wird aus den Navigationsdaten und den Umgebungsdaten eine aktualisierte Zielposition geschätzt, die dann die festgelegte Zielposition des ersten Regelkreises ersetzt.

Das Vehikel ist mit einer Navigationseinrichtung und einer Steuereinrichtung ausgestattet. Die Steuereinrichtung kann einen Steuerrechner umfassen, der Vehikelsteuerungsbefehle generiert, die erforderlich sind, um von der von der Navigationseinrichtung geschätzten Vehikelposition zu der aktuell vorliegenden, von der Basisstation übertragenen Zielobjektsposition zu gelangen. Die Berechnung der Lenkung des Vehikels kann asynchron zu einer Veränderung (Update) der Zielposition durch die Basisstation erfolgen. Mit anderen Worten können die beiden Regelkreise unabhängig voneinander betrieben werden.

Das Vehikel besitzt neben dem Umgebungssensor eine (im Verhältnis zu einer evtl. Bildverarbeitungseinrichtung kostengünstige) Navigationseinrichtung, die Position und Orientierung des Vehikels und somit des Umgebungssensors im Raum ermitteln kann. Eine Verarbeitung der Sensordaten des Umgebungssensors muss im Vehikel nicht stattfinden. Die Umgebungsdaten werden zusammen mit den Navigationsdaten an die Basisstation übertragen. Aus den Sensor- und Navigationsdaten kann die Basisstation eine geschätzte Zielposition berechnen, die an das Vehikel übertragen wird. Das Vehikel kann dann in Richtung der zuletzt von der Basisstation übermittelten Zielposition lenken.

Insbesondere kann die Zielposition jederzeit durch die Basisstation verändert (z. B. präzisiert) werden. Ein Eingriff durch die Basisstation, etwa über eine Bedienperson (d.h. eine Person in der Basisstation) ist bis zum Schluss möglich. Durch die Verarbeitung in der Basisstation können in der Regel aufwändigere Verfahren zum Einsatz kommen. Die Sicherheit der Zielverfolgung kann damit steigen.

Vorteilhaft an einem solchen Verfahren und System kann sein, dass die Übertragungszeit zwischen den Datenübertragungseinrichtungen nicht in den Lenkregelkreis eingehen muss. Ein Lenken zum Ziel kann also auch bei hohen Geschwindigkeiten erfolgen. Außerdem können die Kosten des Vehikels deutlich reduziert werden, da es keine Bildverarbeitungseinrichtung, sondern lediglich eine Bildübertragungseinrichtung zur Basisstation benötigt. Auch eine Gewichtsreduzierung des Vehikels ist auf diese Weise möglich.

Insbesondere kann das Verfahren bei stehenden oder sich langsam bewegenden Zielen die eingangs genannten Probleme deutlich reduzieren oder beseitigen.

Im Folgenden werden Ausführungsbeispiele der Erfindung mit Bezug auf die beiliegenden Figuren detailliert beschrieben.

### KURZE BESCHREIBUNG DER FIGUREN

- **Fig. 1**: zeigt eine schematische Ansicht eines Systems gemäß einer Ausführungsform der Erfindung.
- **Fig. 2**: zeigt ein Flussdiagramm für ein Verfahren das in einem Vehikel gemäß einer Ausführungsform der Erfindung ausgeführt werden kann.
- **Fig. 3**: zeigt ein Flussdiagramm für ein Verfahren das in einer Basisstation gemäß einer Ausführungsform der Erfindung ausgeführt werden kann.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILIERTE BESCHREIBUNG VON AUSFÜHRUNGSBEISPIELEN

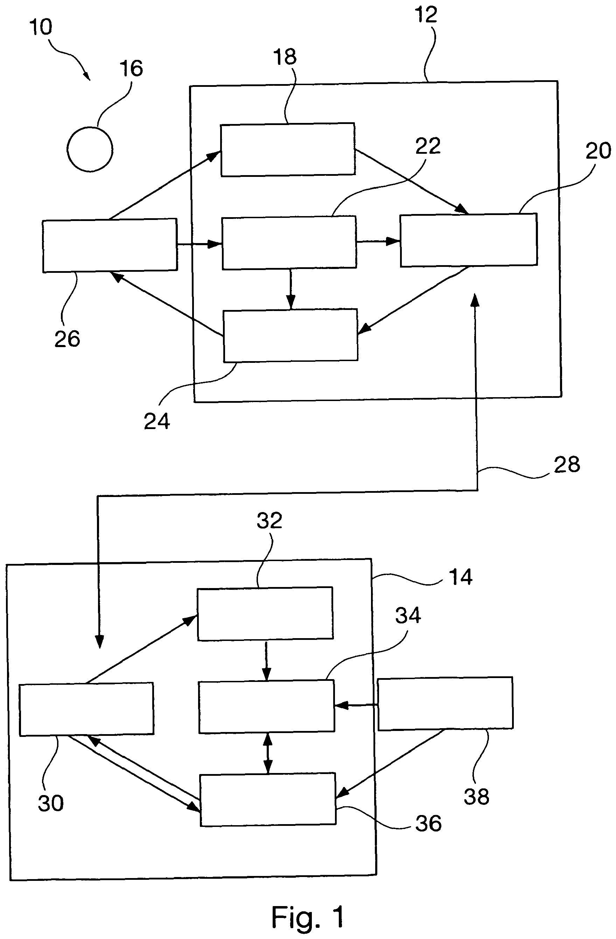

Die Fig. 1 zeigt schematisch ein System 10 mit einem Vehikel 12 und einer Basisstation 14. Das System ist dazu ausgeführt das Vehikel 12 in Richtung eines Ziels 16 bzw. zum Ziel 16 zu lenken.

Das Vehikel 12 umfasst einen Umgebungssensor 18, beispielsweise eine Kamera 18, die Bilder der Umgebung 26 des Vehikels erfassen kann. Das Ziel 16 kann damit jedes beliebige Objekt 16 sein, das in den durch den Sensor 18 aufgenommenen Umgebungsdaten Merkmale hinterlässt, also beispielsweise in einem Umgebungsbild sichtbar ist. Der Umgebungssensor 18 kann also ein Sensor sein, dessen Messdaten Rückschlüsse auf das zu erreichende Ziel geben, etwa eine gewöhnliche Kamera, eine Time-Of-Flight-Kamera, ein SA-Radar, ein Lidarssystem. Der Umgebungssensor 18 ist mit einer Übertragungseinrichtung 20 verbunden, die die Umgebungsdaten über den Übertragungsweg 28 an die Basisstation 14 sendet.

Das Vehikel 12 umfasst weiter eine Navigationseinrichtung 22, die Navigationsdaten des Vehikels 12, beispielsweise die Position und die Lage des Vehikels 12 in Bezug auf die Umgebung 26 des Vehikels, ermittelt kann. Die Navigationseinrichtung 22 kann beispielsweise einen GPS-Empfänger oder eine Beschleunigungssensor umfassen. Auch die Navigationseinrichtung 22 ist mit der Übertragungseinrichtung 20 verbunden, so dass die ermittelten Navigationsdaten zusammen mit den Umgebungsdaten an die Basisstation 14 übertragen werden können.

Die Datenübertragungseinrichtung 20 kann beispielsweise ein Sender/Empfänger 20 sein, über den mit der Basisstation Daten über Funk ausgetauscht werden können.

Weiter umfasst das Vehikel 12 eine Steuereinrichtung 24 mit einem Steuerrechner, der aus den Navigationsdaten aus der Navigationseinrichtung 22 Steuerbefehle für das Vehikel generiert, mit denen das Vehikel 12 auf das Ziel 16 zusteuern kann. Dazu kann die Steuereinrichtung 24 dem Vehikel 12 entsprechende Aktuatoren aufweisen, wie etwa einen Antrieb, Steuerklappen, ein Ruder, ein Lenkrad oder ähnliches, die durch die Steuerbefehle angesteuert werden. Aufgrund der Steuerbefehle der Steuereinrichtung 24 ändern das Vehikel 12 seine Position und/oder Lage im Raum 26 bzw. der Umgebung 26. Aufgrund dieser Änderung können durch die Navigationseinrichtung 22 neue, geänderte Navigationsdaten ermittelt werden, die wieder eine Rückwirkung auf die Steuerbefehle haben können. Auf diese Weise ist im Vehikel ein innerer Lenkregelkreis 22, 26, 28 vorhanden, die auf die Umgebungsdaten aus dem Umgebungssensor 18 verzichten kann.

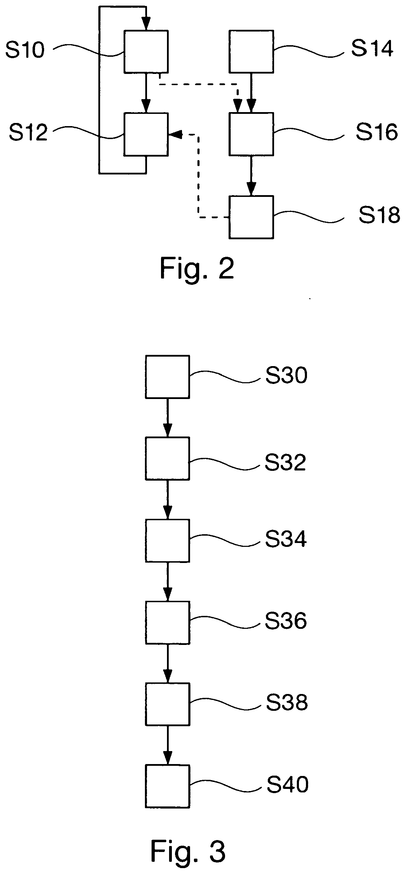

In Bezug auf die Fig. 2 wird nun ein Verfahren beschrieben, dass das Vehikel 12 ausführen kann.

In einem Schritt S10 werden Navigationsdaten durch die Navigationseinrichtung 22 ermittelt, aus denen die aktuelle Position und die aktuelle Lage des Vehikels 12 im Raum 26 ermittelt werden kann. Beispielsweise schätzt die Navigationseinrichtung 22 eine sich neu ergebende Position und Lage des Vehikels 12 und übergibt sie dem Steuerrechner der Steuereinrichtung 24.

In einem Schritt S12 ermittelt die Steuereinrichtung 24 aus den Navigationsdaten aus der Navigationseinrichtung 22 Steuerbefehle, die an Aktuatoren der Steuereinrichtung übermittelt werden, um das Vehikel 12 dem Ziel 16 näherzubringen.

Insbesondere ermittelt der Steuerrechner 24 aus den vorliegenden Zielpositionsinformationen, d.h. der festgelegten Zielposition, und der durch die Navigationseinrichtung 22 ermittelten Schätzung der Position Lenkkommandos, die in der Regel über untergeordnete Regler die Aktuatoren wie etwa Motoren, Steuerklappen, Gestänge usw. ansteuern. Die Ansteuerung der Aktuatoren führt zu einer Änderung der Bewegung des Vehikels 12 und damit zu einer anderen Position und/oder Lage des Vehikels 12 im Raum im Raum.

Die Schritte S10 und S12 bilden einen ersten Regelkreises, der sog. Lenkregelkreis, hier bestehend aus der Navigationseinrichtung 22, der Steuereinrichtung 24und der Umgebung 26. In diesem Regelkreis versucht der Steuerrechner 24, durch geeignete Ansteuerung der Aktuatoren, den Abstand zum Ziel 16 zu minimieren.

In einem Schritt S14 werden Umgebungsdaten mit dem Umgebungssensor 18 ermittelt. Diese Messdaten können bei einer Kamera 18 beispielsweise ein Bild umfassen.

In einem Schritt S16 werden die Umgebungsdaten und die Navigationsdaten von der Datenübertragungseinrichtung 20 des Vehikels 12 an die Datenübertragungseinrichtung 30 der Basisstation 14 übertragen.

In einem Schritt S18 empfängt die Datenübertragungseinrichtung 20 des Vehikels 12 die von der Datenübertragungseinrichtung 30 der Basisstation 14 gesendeten Ergebnisse in Form von neuen Zielpositionsdaten. Der Empfang erfolgt nach einer Latenzzeit, die durch den Übertragungsweg 28 und die Auswertung der Daten in der Basisstation 14 bestimmt sein kein.

Die Schritte S14, S16 und S18 können asynchron zum Lenkkreis bzw. asynchron zu den Schritten S10 und S12 erfolgen.

In einem Schritt S20 wird überprüft, ob neue geschätzte Zielpositionsdaten vorliegen. Liegen neue Zielpositionsdaten vor, werden die im Steuerrechner 24 vorliegenden festgesetzten Zielpositionsdaten ersetzt.

Man beachte, dass für die Stabilität des Lenkkreises 22, 24, 26 die Latenzzeit der Verarbeitung der Umgebungsdaten irrelevant ist. Umgekehrt hat das zügige Vorliegen von aktualisierten Zielpositionsdaten (auch bei stehenden Zielen) großen Einfluss auf die Genauigkeit des Erreichens des Ziels.

Wieder in Bezug auf die Fig. 1 umfasst die Basisstation 14 eine Datenübertragungseinrichtung 30, mit der Daten über den Übertragungsweg 28 mit dem Vehikel 12 ausgetauscht werden können.

Die Basisstation 14 umfasst weiter eine Datenaufbereitungseinrichtung 32, in der die über die Übertragungseinrichtung 30 empfangenen Umgebungsdaten des Umgebungssensors 18 aufbereitet werden. Analog übertragene Bilder können zum Beispiel digitalisiert werden. Ein Kontrastausgleich kann durchgeführt und Bilddaten in einen geeigneten Farbraum sowie in ein geeignetes Bildformat transformiert werden.

Weiter umfasst die Basisstation eine Zielverfolgungseinrichtung 34 bzw. einen Tracker 34, mit der in den aufbereiten Umgebungsdaten eine Position des Ziels bestimmt werden kann. Beispielsweise kann die Zielverfolgungseinrichtung 34 einen im Fall von Bilddaten als Umgebungsdaten den Azimut- und Elevationswinkel des Ziels 16 im Koordinatensystem der Kamera 18 ermitteln.

Die Zielverfolgungseinrichtung kann somit Zielverfolgungsdaten erstellen, die einer Positionsbestimmungseinrichtung 36 bzw. einem Trackfilter 36 der Basisstation zu Verfügung gestellt werden. Aus den Zielverfolgungsdaten und den Navigationsdaten des Vehikels 12 ermittelt die Positionsbestimmungseinrichtung 36 eine geschätzte Zielposition des Ziels 16, die mit der Übertragungseinrichtung 30 an das Vehikel 12 übertragen wird.

Darüber hinaus kann in der Basisstation eine Bedienperson 38 anwesend sein, die in die Ermittlung der Zielverfolgungsdaten und der Zielposition eingreifen kann. Die Bedienperson 38 ist optional. Besitzt die Basisstation 14 die Möglichkeit des Bedienereingriffs, kann sie auch Bedienstation 14 genannt werden.

Das System 10 kann die optionale Möglichkeit bieten, eine Bedienperson 38 bei der Zielauswahl (in der Zielverfolgungseinrichtung 34) und der Zielverfolgung (im Trackfilter 36) mit eingreifen zu lassen. Die Bedienereingriffe der Bedienperson 38 können dabei die Zielverfolgungseinrichtung 34 und den Trackfilter 36 stützen.

In Bezug auf die Fig. 3 wird nun ein Verfahren beschrieben, dass in der Basisstation ausgeführt werden kann.

In einem Schritt S30 wird eine initiale Zielposition für das Vehikel 10 bzw. für die Steuereinrichtung 24 festgelegt. Dem Vehikel kann beispielsweise von der Basisstation 14 eine grobe Schätzung der Zielposition des Ziels 16 übermittelt werden.

Auch kann (z. B. mit den ersten Daten des Umgebungssensors 18) das Ziel 16 bzw. Zielmerkmale des Ziels 16 unter Verwendung der Umgebungsdaten des Umgebungssensors 18 in der Basisstation 14 markiert und die Zielverfolgungseinrichtung 34 damit initialisiert werden. Dieses Markieren kann beispielsweise durch eine Bedienperson erfolgen.

Alternativ kann die initiale Zielposition vorab im Steuerrechner 24 bzw. in der Steuereinrichtung 24 im Vehikel 12 hinterlegt sein.

Die festgelegte Zielposition in der Steuereinrichtung 24 ist damit zunächst die initiale Zielposition.

In einem Schritt S32 werden die von dem Vehikel 12 übertragenen Daten des Umgebungssensors 18 mit den zugehörigen Daten der Navigationseinrichtung 22 von der Datenübertragungseinrichtung 30 empfangen.

In einem Schritt S34 werden die Umgebungsdaten von der Datenaufbereitungseinrichtung 32 aufbereitet.

In einem Schritt S36 werden die aufbereiteten Umgebungsdaten zusammen mit den Navigationsdaten an die Zielverfolgungseinrichtung 34 übergeben. In der Zielverfolgungseinrichtung 34 wird eine Zielverfolgung auf Basis der Umgebungsdaten evtl. unter Verwendung von vorhergesagten Zieldaten aus dem Trackfilter 36 durchgeführt wird.

In einem Schritt S38 wird das Ergebnis der Zielverfolgung, also z. B. die Bildkoordinate des Schwerpunkts des im Bild verfolgten Ziels 16, dem Trackfilter 36 zusammen mit den zeitlich zu den Umgebungssensordaten gehörigen Navigationsdaten übermittelt. Der Trackfilter 36 schließt unter Verwendung der Zielverfolgungsdaten und den Navigationsdaten auf die geschätzte Position des Ziels 16 im Raum. Beispielsweise kann bei der Verwendung von Bildern hierbei ein klassisches Triangulationsproblem zu lösen sein. Dabei kann der zeitliche Verlauf der Daten berücksichtigt werden.

Im Fall einer gewöhnlichen Kamera als Umgebungssensor 18 kann die Zielverfolgungseinrichtung 34 im Wesentlichen den Azimut- und Elevationswinkel des Ziels 16 im Kamerakoordinatensystem liefern. Diese Daten sind nicht unbedingt ausreichend für eine dreidimensionale Bestimmung der Zielposition im Raum. Liegen keine offensichtlichen Beschränkungen (etwa bei einem fahrenden Vehikel 12 in der Ebene) vor, werden in der Regel mehrere Messungen aus verschiedenen Kamerapositionen benötigt, mit denen der Trackfilter 36 eine eindeutige Zielposition bestimmen kann.

Eine Ausprägung des Trackfilters 36 ist beispielsweise ein Extended Kalman Filter.

In einem Schritt S40 wird die neue geschätzte Zielposition des Ziels 16 über die Datenübertragungseinrichtung 30 an das Vehikel 12 übertragen.

Während der Annäherung des Vehikels 12 an das Ziel 16 über geeignete Bahnen, die im Steuerrechner der Steuereinrichtung 24 bestimmt werden, werden in der Regel die erhaltenen Umgebungssensorinformationen (Umgebungsdaten) genauer, so dass die Zielposition während der Annäherung präzisiert werden kann. Ähnliches gilt für den Fall eine sich bewegenden Ziels 16. Hier ermöglicht die kontinuierliche Verfolgung die Nachführung der Zielposition. Auf diese Weise wird ein äußerer Regelkreis geschaffen, über den die Zielposition nachjustiert werden kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: System
- 12: Vehikel
- 14: Basisstation
- 16: Ziel
- 18: Umgebungssensor
- 20: Datenübertragungseinrichtung
- 22: Navigationseinrichtung
- 24: Steuereinrichtung
- 26: Umgebung des Vehikels
- 28: Übertragungsweg
- 30: Datenübertragungseinrichtung
- 32: Datenaufbereitungseinrichtung
- 34: Zielverfolgungseinrichtung
- 36: Trackfilter
- 38: Bedienperson

## Patentansprüche

1. Verfahren zum Lenken eines Vehikels (12) in Richtung eines Ziels (16), das Verfahren umfassend die Schritte:
Erfassen von Navigationsdaten des Vehikels (12) mit einer Navigationseinrichtung (22);
Lenken des Vehikels (12) in Richtung einer festgelegten Zielposition auf Basis der Navigationsdaten;
Erfassen von Umgebungsdaten des Vehikels (12) mit einem Umgebungssensor (18);
Übertragen der Umgebungsdaten und der Navigationsdaten an eine Basisstation (14);
Ermitteln einer geschätzten Zielposition des Ziels (16) aus den Umgebungsdaten und den Navigationsdaten in der Basisstation (14);
Übertragen der geschätzten Zielposition an das Vehikel (12);
Ändern der festgelegten Zielposition in die geschätzte Zielposition; **dadurch gekennzeichnet, dass** der Schritt des Ermittelns der geschätzten Zielposition die folgenden Schritte umfasst:
Bestimmen von Zielmerkmalen des Ziels in den Umgebungsdaten in der Basisstation (14);
Verfolgen der Zielmerkmale in den Umgebungsdaten über die Zeit;
Initialisieren der Zielmerkmale durch eine Bedienperson (38) in der Basisstation (14); und
Ermitteln der geschätzten Zielposition aus den über die Zeit verfolgten Zielmerkmalen und den Navigationsdaten in der Basisstation (14).

2. Verfahren nach Anspruch 1,
wobei die Navigationsdaten eine Position und/oder eine Orientierung des Vehikels (12) umfassen.

3. Verfahren nach Anspruch 1 oder 2,
wobei die Umgebungsdaten Bilddaten der Umgebung des Vehikels (12) umfassen.

4. Verfahren nach einem der vorhergehenden Ansprüche, weiter umfassend den Schritt:
Präzisieren der geschätzten Zielposition durch eine Bedienperson (38) in der Basisstation.

5. System (10) mit einem ein Vehikel (12) und eine Basisstation (14) zum Lenken des Vehikels (12) in Richtung eines Ziels (16),
wobei das Vehikel (12) umfasst:
einen Umgebungssensor (18) zum Erfassen von Umgebungsdaten;
eine Navigationseinrichtung (22) zum Erfassen von Navigationsdaten;
eine Steuereinrichtung (24) zum Lenken des Vehikels (12) in Richtung einer festgelegten Zielposition auf Basis der Navigationsdaten;
eine erste Datenübertragungseinrichtung (20) zum Senden der Umgebungsdaten und der Navigationsdaten zu der Basisstation (14);
wobei die Basisstation umfasst:
eine Positionsbestimmungseinrichtung (36) zum Ermitteln einer geschätzten Zielposition des Ziels (16) aus den Umgebungsdaten und den Navigationsdaten;
eine zweite Datenübertragungseinrichtung (30) zum Übertragen der geschätzten Zielposition an das Vehikel;
wobei die Steuereinrichtung (24) dazu ausgeführt ist, die festgelegte Zielposition durch die geschätzte Zielposition zu ersetzen,
wobei die Basisstation (14) weiter eine Zielverfolgungseinrichtung (34) umfasst, die dazu ausgeführt ist, Zielmerkmale des Ziels (16) in den Umgebungsdaten zu bestimmen;
wobei die Zielverfolgungseinrichtung (34) dazu ausgeführt ist, die Zielmerkmale in den Umgebungsdaten über die Zeit zu verfolgen,
wobei die Positionsbestimmungseinrichtung (36) dazu ausgeführt ist, die geschätzte Zielposition aus den über die Zeit verfolgten Zielmerkmalen und den Navigationsdaten zu bestimmen; und
wobei die die Basisstation (14) dazu ausgebildet ist, dass die Zielmerkmale durch eine Bedienperson (38) in der Basisstation (14) initialisierbar sind.

## Claims

1. Method for steering a vehicle (12) in the direction of a target (16), the method comprising the steps of:
capturing navigation data of the vehicle (12) using a navigation device (22);
steering the vehicle (12) in the direction of an established target position on the basis of the navigation data;
capturing environment data of the vehicle (12) using an environment sensor (18);
transmitting the environment data and the navigation data to a base station (14);
ascertaining an estimated target position of the target (16) from the environment data and the navigation data, in the base station (14);
transmitting the estimated target position to the vehicle (12) ;
altering the established target position into the estimated target position;
**characterised in that** the step of determining the estimated target position comprises the following steps:
determining target features of the target in the environment data in the base station (14);
tracking the target features in the environment data over time;
an operator (38) initialising the target features in the base station (14); and
ascertaining the estimated target position from the target features which are tracked over time and the navigation data, in the base station (14).

2. Method according to claim 1,
wherein the navigation data comprise a position and/or orientation of the vehicle (12).

3. Method according to either claim 1 or claim 2,
wherein the environment data comprise image data of the environment of the vehicle (12).

4. Method according to any of the preceding claims, further comprising the step of:
an operator (38) refining the estimated target position in the base station.

5. System (10) comprising a vehicle (12) and a base station (14) for steering the vehicle (12) in the direction of a target (16),
wherein the vehicle (12) comprises:
an environment sensor (18) for capturing environment data;
a navigation device (22) for capturing navigation data;
a control device (24) for steering the vehicle (12) in the direction of an established target position on the basis of the navigation data;
a first data transmission device (20) for sending the environment data and the navigation data to the base station (14) ;
wherein the base station comprises:
a position determination device (36) for ascertaining an estimated target position of the target (16) from the environment data and the navigation data;
a second data transmission device (30) for transmitting the estimated target position to the vehicle;
wherein the control device (24) is configured to replace the established target position with the estimated target position;
wherein the base station (14) further comprises a target tracking device (34), which is configured to determine target features of the target (16) in the environment data; wherein the target tracking device (34) is configured to track the target features in the environment data over time; wherein the position determination device (36) is configured to determine the estimated target position from the target features which are tracked over time and the navigation data; and
wherein the base station (14) is formed in order for the target features to be initialisable by an operator (38) in the base station (14).

## Revendications

1. Procédé de braquage d'un véhicule (12) dans le sens d'une cible (16), le procédé comprenant les étapes :
saisie de données de navigation du véhicule (12) avec un dispositif de navigation (22) ;
braquage du véhicule (12) dans le sens d'une position cible fixée sur la base des données de navigation ;
saisie de données d'environnement du véhicule (12) avec un capteur d'environnement (18) ;
transmission des données d'environnement et des données de navigation à une station de base (14) ;
calcul d'une position cible estimée de la cible (16) à partir des données d'environnement et des données de navigation dans la station de base (14) ;
transmission de la position cible estimée au véhicule (12) ;
changement de la position cible fixée à la position cible estimée ;
**caractérisé en ce que** l'étape de calcul de la position cible estimée comprend les étapes suivantes :
détermination de caractéristiques de la cible dans les données d'environnement dans la station de base (14) ;
suivi des caractéristiques dans les données d'environnement sur la durée ;
initialisation des caractéristiques par un opérateur (38) dans la station de base (14) ;
calcul de la position cible estimée à partir des caractéristiques suivies sur la durée et des données de navigation dans la station de base (14).

2. Procédé selon la revendication 1,
dans lequel les données de navigation comprennent une position et/ou une orientation du véhicule (12).

3. Procédé selon la revendication 1 ou 2,
dans lequel les données d'environnement comprennent des données d'image de l'environnement du véhicule (12).

4. Procédé selon l'une des revendications précédentes, comprenant en outre l'étape :
précision de la position cible estimée par un opérateur (38) dans la station de base.

5. Système (10) avec un véhicule (12) et une station de base (14) permettant le braquage d'un véhicule (12) dans le sens d'une cible (16),
dans lequel le véhicule (12) comprend :
un capteur d'environnement (18) permettant la saisie de données d'environnement ;
un dispositif de navigation (22) permettant la saisie de données de navigation ;
un dispositif de pilotage (24) permettant le braquage du véhicule (12) dans le sens d'une position cible fixée sur la base des données de navigation ;
un premier dispositif de transmission de données (20) permettant d'envoyer les données d'environnement et les données de navigation à une station de base (14) ;
dans lequel la station de base comprend :
un dispositif de détermination de position (36) permettant de calculer une position cible estimée de la cible (16) à partir des données d'environnement et des données de navigation :
un deuxième dispositif de transmission de données (30) permettant de transmettre la position cible estimée au véhicule ;
dans lequel le dispositif de pilotage (24) est réalisé de façon à remplacer la position cible fixée par la position cible estimée,
dans lequel la station de base (14) comprend en outre un dispositif de suivi de cible (34), lequel est réalisé de façon à déterminer des caractéristiques de la cible dans les données d'environnement ;
dans lequel le dispositif de suivi de cible (34) est réalisé de façon à suivre les caractéristiques de la cible dans les données d'environnement sur la durée,
dans lequel le dispositif de détermination de position (36) est réalisé de façon à déterminer la position cible estimée à partir des données d'environnement suivies sur la durée et des données de navigation ; et
dans lequel la station de base (14) est réalisée de façon à ce que les caractéristiques puissent être initialisées par un opérateur (38) dans la station de base (14).
